Europäisches Patentamt

(19) European Patent Office

Office européen des brevets

(11) Publication number: **0 131 348**
**A2**

(12) # EUROPEAN PATENT APPLICATION

(21) Application number: **84300948.1**

(22) Date of filing: **14.02.84**

(51) Int. Cl.⁴: **B 01 D 29/38**

(30) Priority: **12.07.83 IL 69206**

(43) Date of publication of application:
**16.01.85 Bulletin 85/3**

(84) Designated Contracting States:
**DE GB IT NL**

(71) Applicant: **Vehashkaya, Amiad Sinun**
**Kibbutz Amiad 12335**
**M.P. Hevel Korazim(IL)**

(72) Inventor: **Orlans, Itzhak**
**Kibbutz Amiad 12335**
**M.P. Hevel Korazim(IL)**

(74) Representative: **Miller, Joseph et al,**
**J. MILLER & CO. Lincoln House 296-302 High Holborn**
**London WC1V 7JH(GB)**

(54) Automatic backflushing filter.

(57) A cylindrical tubular filter is positioned in a housing so that fluid flow is from inside the filter to the outside. Disposed in the filter are a pair of wings with open mouths facing the filter interior. When excess contaminants accumulate on the filter interior the wings are made to rotate to receive the contaminants and thus clean the filter.

Fig. 1

Croydon Printing Company Ltd.

EP 0 131 348 A2

- 1 -

## Automatic backflushing filter

The present invention generally relates to a filtering device and more particularly to a system and method of cleaning a filter element of a filtering device in a hydraulic flow system in situ, with continuous or stream flow.

As is appreciated, quite often relatively unclean water is used for irrigation purposes. In order not to clog up small orifices in pipes or other irrigation devices used for such purposes, filtering devices are employed. These include one more filter to filter out various contaminates which reach the device from the upstream water source to prevent them from flowing downstream. Clearly, to prevent total filter clogging the filter need be cleansed periodically, to remove the contaminates which accumulate on its upstream side.

In order to eliminate any interruption of the irrigation process, it is desirable that such filter cleansing be done with minimal, if any interruption of the water flow. Clearly it is important that the cleansing operation be done thoroughly and that the arrangement, used to cleanse the filter, operate reliably, require little maintenance and be reasonably inexpensive.

In the prior art various arrangements to cleanse such a filter have been proposed. However, they all suffer from one or more basic disadvantages. The present invention provides a new filter device with a uniquely advantageous cleansing arrangement. In accordance with the present invention the novel filter device comprises:

a housing having inlet and outlet ports through which fluid is adapted to enter said housing from an upstream source and exit downstream, respectively;

a housing having inlet and outlet ports through which fluid is adapted to enter said housing from an upstream source and exit downstream, respectively;

a tubular filter disposed in said housing so that its inner and outer sides are in flow communication with said inlet and outlet ports respectively, said inner and outer sides being definable as the filter's upstream and downstream sides, respectively;

filter cleaning means for cleansing said filter, said filter cleansing means including means which are disposed inside said filter for rotation in either of two opposite directions about an axis concentric with the filter's longitudinal axis in response to control signals; and

control means for providing said control signals.

As will become apparent, the filter cleansing means comprise a hollow pipe with one and preferably two hollow wings, each of which extends from the pipe and has an outward opening or mouth. The pipe is concentric with the filter axis and the wings' mouths abut against the filter upstream side so that they are effectively disposed to the downstream pressure. One end of the pipe is connected to a mechanism, which when commanded by command signals, causes the pipe to rotate in one direction, e.g. clockwise (CW) and then in the opposite direction, e.g. counterclockwise (CCW). The housing is fitted with a hydraulic valve which is in flow communication with the pipe's interior. To cleanse the filter, the valve is opened, thus exposing the pipe's interior to atmospheric pressure, and the pipe with the wings are made to rotate. By regulating the downstream pressure, to be greater than atmospheric, e.g. 2 atmosphere, the pressure at the wings' mouths is higher than that in the pipe. Consequently downstream water forces itself through the filter and flushes contaminates which are on the filter's upstream side into the rotating wings, whose mouths serve as suction brushes and therefrom through the pipe hollow inside, and the open hydraulic valve to the housing exterior. Once cleansing has been achieved, the valve is closed and the rotation of the pipe and the wings is stopped. The entire operation is performable without interrupting the water flow through the housing.

The novel features of the invention are set forth with particularity in the appended claims. The invention will best be understood from the following description when read in conjunction with the accompanying drawings.

Figure 1 is an isometric view, useful in explaining the invention; and

Figure 2 is a simple cross-sectional view.

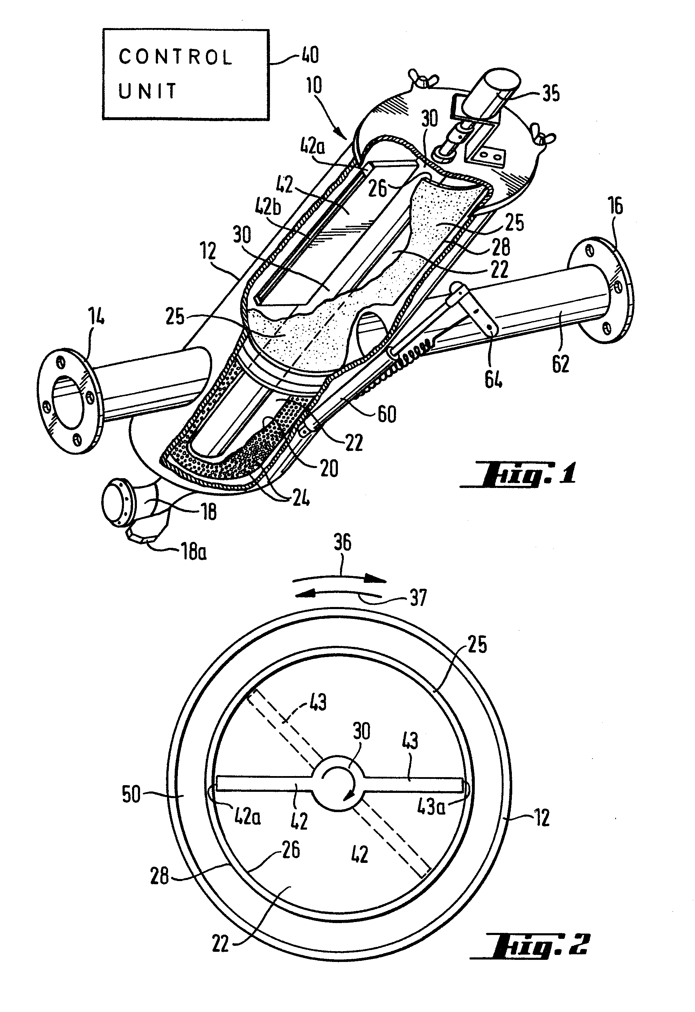

Attention is first directed to Fig. 1 which is a simplified isometric diagram of the filtering device incorporating the novel filter cleansing arrangement. The device 10 consists of a housing 12 with an inlet port 14 and an outlet port 16. It is through the inlet port that water from an upstream source enters the housing to be filtered. The filtered water exits the housing through the outlet port. A hydraulic valve 18 with an outlet 18a is also provided. It is through the valve outlet 18a that the cleansing water together with contaminates which were removed from the filter, exit the housing, as will be described later in detail.

Briefly, located in the housing is a coarse filter 20 through which the water entering the housing via the inlet port 14 passes to the filter's interior 22. The function of filter 20 is to prevent relatively large contaminates 24, e.g. small pebbles or the like from entering the filter interior 22. This filter is not the one to be cleansed.

The filter interior 22 is in flow communication with the interior of the upper portion of the housing, and thus is designated by the same numeral. Positioned in the upper portion is a fine filter 25, which is in tubular shape. Its inner side 26 is exposed to the interior 22. Since water from the upstream is present there, the filter inner side may be regarded as its upstream side. Upstream water passes through the filter from the latter's upstream side to its outer or downstream side 28. Since the filter 25 is of a fine mesh or other structure with small openings, small contaminates in the water is filtered out by filter 25 and prevented from passing downstream to the outlet or downstream port 16.

As water continues to flow the amount of contaminates in the filter's upstream side 26 increases. Unless they are removed, that is, the filter is cleansed they may clog the filter completely, and thus stup the downstream flow as well as damage the filtering device. When filter cleansing is to be performed may depend on the design of the device. For example, it may be performed at fixed intervals, based on the flow rate. On the other hand it may be cased on the pressure difference across the filter. As long as the difference between the upstream pressure, defined as $P_U$, and the downstream pressure $P_D$, is less than a $\Delta P$ it would indicate that the filter does not require cleansing. On the other hand when the pressure difference is greater than $\Delta P$, i.e. $P_U - P_D > \Delta P$, thus indicating a drop in $P_D$, cleansing should take place, since the drop in $P_D$ is due to filter clogging. Such pressure difference measurements are not new and thus will not be described in further detail.

The cleansing of the filter 25 is performed by the novel cleansing arrangement of the invention. It consists of a hollow pipe or tube 30 which extend through the housing and is concentric with the longitudinal axis of the filter. At one end the pipe's interior is in flow communication with the valve 18, so that when the latter is opened it exposes the pipe interior to the outlet 18a, i.e. to the exterior atmospheric pressure. At the other end, a pipe rotating mechanism 35 is connected to the closed end of pipe 30.

- 6 -

The function of the mechanism 35 to respond to control signals from a control unit 40 to rotate about its axis in two opposite directions as designated by arrows 36 (CW) and 37 (CCW) and thus rotate the pipe and any other parts connected thereto as will be described hereafter in conjunction with Fig. 2. The latter is a cross-sectional diagram across line 2-2 in Fig. 1.

As shown in Fig. 2, wherein elements like those previously described are designated by like numerals, connected to the pipe 30 are a pair of opposite radially extending hollow wings 42 and 43. They extend from the pipe so that their outer ends 42a and 43a are juxtaposed with the upstream side 26 of the filter. The wings' ends define openings or mouths, such as the mouth 42b of wing 42 as shown in Fig. 1. Thus, a flow path is provided from the filter's upstream side 26, to the valve 18 through the two hollow wings and the hollow interior of pipe 30. It should be pointed out that on the upstream side 26 of the filter 25 the pressure is the upstream pressure $P_U$. As to the pressure in the wings and the pipe it is substantially equal to the upstream pressure $P_U$, as long as cleansing does not take place.

Other than during filter cleansing the valve 18 is closed and therefore the pipe interior is not exposed to the atmospheric pressure. However when filter cleansing is required the valve 18 is opened by the control unit 40, and mechanism 35 is actuated to rotate the pipe, first in one direction, e.g. CW and then in the other, CCW so that the pipe returns to its original position. As the pipe rotates, the wings pass by the entire surface of the upstream side 26 of the filter. The pressure in the downstream side, designated 50 in Fig. 2 is regulated to be higher than atmospheric pressure, e.g. 2 atmospheres.

Since the pipe end at valve 18 is at atmospheric pressure, water from the filter downstream side 28 is forced back through the filter into the wings through their open mouths and therefrom it flows through the wings and the hollow pipe and exits the housing through valve opening 18a. This downstream water, as it passes through the filter, carries with it contaminates which accumulated on the filter upstream side 26. Thus, as the wings rotate, the entire filter upstream side is cleansed by the backflushing water flowing into the wings.

In the present invention the rate of rotation of the pipe is relatively slow. Consequently each strip of surface of the filter upstream side faces a wing mouth for a reasonably long period, thereby insuring the thorough cleansing of the strip by the removal of contaminates therefrom. The mechanism 35 may be a hydraulic device and electromechanical device, e.g. a motor, or the like, whose speed can be easily controlled. Under field conditions hydraulic pressure is always available, Thus hydraulic drive means may be preferred. In any case mechanism 35 is not a high speed water-driven wheel whose rotation is directly dependent on the pressure in the filter.

It has been discovered that when employing more than one wing, e.g. two, as shown, the pipe need not be rotated even one full revolution. With two wings the pipe can be rotated in each direction only slightly more than 180°, e.g. 190° to insure the cleansing of the entire surface of the filter upstream side. The desirability of turning the pipe slightly more than 180° is to provide some overlap and thus insure that the entire filter surface is juxtaposed with the mouth of at least one of the wings. That this is achieved by such rotations is apparent from Fig. 2 wherein the solid lines designate the wings before and after the rotations in the two directions and the dashed lines designate the intermediate wings' position. It is clear that for a clockwise direction of rotation first, wing 42 is exposed to and cleans the upper half of the filter 25 plus an additional 10°. Similarly, wing 43 is exposed to and cleans the lower half of the filter plus +10°. Each wing passes twice by a different half of the filter, once when rotated in one direction and once when rotated in the opposite direction. Thus, with two wings even though the pipe rotates a total of 380° for both directions, i.e. slightly more than one revolution, each surface area of the filter is cleansed at least once.

After the pipe and the wings are returned to their initial positions, i.e. after cleansing the filter surface twice, the valve 18 is closed, and normal flow through the housing continues. It should be recalled that in order to insure proper backflushing by downstream water of the contaminates into the wings and the pipe, the downstream pressure is regulated to be sufficiently above the atmospheric pressure. This is necessary to insure a sufficient pressure difference between the downstream side and the pressure at the open valve outlet 18a. This can be achieved by different means. For example, the control unit in response to a measured downstream pressure signal may actuate a piston 60 (Fig. 1) to move a baffle (not shown) inside the outlet pipe 62, which pivots about pivot 64 until the downstream pressure reaches its desired level. However, after filter cleansing the piston is deactivated, so that the downstream pressure is controlled by the water flow through the filtering device.

It should be stressed that with the device of the present invention, the flow from the inlet to the outlet ports need not be, and typically is not, interrupted. Also it should be pointed out that the number of times the pipe (and the wings) is rotated back and forth is a matter of choice. Also what activates the control unit to produce a cleansing operation may be a matter of choice. In one embodiment actually reduced to practice a cleansing cycle is initiated based on measuring $P_U$ and $P_D$ to calculate a $\Delta P$. Whenever $\Delta P$ is not less than a chosen value the pipe is rotated once in each direction. In the particular embodiment, after one such cycle, $\Delta P$ is expected to drop below the chosen threshold level. If due to excessive contamination it does not, the control unit may be designed to repeatedly rotate the pipe back and forth and thus keep cleaning the filter 25 until $\Delta P$ drops to the threshold level. On the other hand, if desired after one cycle of pipe rotation if $\Delta P$ remains not less than the threshold level, a malfunction-indicating signal may be produced by the control unit. The specific connections between pressure sensing devices piston 60 and rotation control mechanism 35 are not shown since such connections are obvious to one familiar with the art.

Although particular embodiments of the invention have been described and illustrated herein, it is recognized that modifications and variations may readily occur to those skilled in the art and consequently, it is intended that the claims be interpreted to cover such modifications and equivalents.

CLAIMS:

1. A filtering device for filtering out contaminates from a fluid flowing therethrough comprising:

a housing having an inlet and an outlet port, through which fluid flows into said housing and flows out therefrom, respectively;

a tubular filter in said housing, said filter having a filtering well with a circular cross-section, the inner side of said wall being in flow communication with said inlet port and the outer side of said wall being in flow communication with said outlet port;

a hollow pipe inside said filter;

a control valve fixedly secured to said housing and being responsive to a valve control signal for opening the passage therethrough to enable fluid in the pipe interior to flow out of said housing;

n hollow wing-like elements attached to said pipe, each element having a mouth juxtaposed to the filter innerside and providing a third flowpath therefrom to the pipe exterior, n being an integer not less than one; and

mechanical drive means responsive to control signals for rotating said pipe at a preselected rate whereby the product of the number of revolutions and n is greater than one and not greater than x where x is not more than five.

2. A filtering device as recited in Claim 1, where x is less than two.

3. A filtering device as recited in Claim 1, wherein n = 2, the two wings being on opposite sides of said pipe.

4. A filtering device as recited in Claim 1 further including means for sensing the pressures on the inner and outer sides of said filter definable as $P_U$ and $P_D$, respectively, and control means for providing said control signals to said mechanical drive means to rotate said pipe and the n wings attached thereto and to open said control valve when $\Delta P > P_U - P_D$, where $\Delta P$ is a preselected pressure difference.

5. A filtering device as recited in Claim 4, wherein n = 2, the two wings being on opposite sides of said pipe.

6. A filtering device as recited in Claim 4, wherein x is less than two.

7. In a fluid filtering device of the type comprising a housing with inlet and outlet ports through which fluid flows in and out of the housing, a tubular filter in said housing disposed whereby its inner side is in flow communication with said inlet port and its outside is in flow communication with the outlet port, an arrangement comprising:

a hollow pipe centrally disposed in said filter and extending concentrically with the axis thereof;

n hollow wings each with a mouth-like opening juxtaposed to the filter inner side for providing a flowpath therefrom to the pipe interior;

valve means for enabling the pipe interior to be in flow communication with the housing exterior; and

drive means for rotating the pipe and the n wings attached thereto, whereby the mouth of each wing sweeps by a preselected section of the filter inner side, n being an integer not less than one, and the product definable as Z is expressable as Z = n.R where R is the number of revolutions or portion thereof, Z being not more than five.

8.    In a fluid filtering device as recited in Claim 7 further including control means for controlling said drive means to rotate said pipe and for controlling said valve means to provide a flowpath from said pipe interior to the housing exterior.

9.    In a fluid filtering device as recited in Claim 8, wherein n = Z, the two wings being on opposite sides of said pipe and said control means control said drive means to rotate said pipe first in a first direction at least one half revolution and then in a second opposite direction at least one half revolution.

10.    In a fluid filtering device as recited in Claim 9, wherein said control means control said pipe to turn in each direction not more than one revolution and more than one half revolution.

CONTROL
UNIT                    40

10

42a                    35
                    30
42
42b                    26
30                      25
12                      28
                        22
25

14                            16

                              62
                        64
                  60
            22
      18           20
            24

18a

*Fig. 1*

36
37

                    25

                43

        30    43
50                43a
    42a  42       12
        26    42
28
22

*Fig. 2*